# EUROPEAN PATENT APPLICATION

(11) **EP 3 270 624 A1**
(43) Date of publication of application: **17.01.2018**
(21) Application number: 16764577.9
(22) Date of filing: 09.02.2016
(51) Int. Cl.: H04W 28/04, H04W 72/04

(54) **USER EQUIPMENT AND WIRELESS COMMUNICATION METHOD**

(30) Priority: 13.03.2015 JP 2015051027
(71) Applicant: NTT DOCOMO, INC., Chiyoda-ku Tokyo 100-6150 (JP)
(72) Inventor: UCHINO, Tooru, Tokyo 100-6150 (JP); TAKEDA, Kazuki, Tokyo 100-6150 (JP); TAKAHASHI, Hideaki, Tokyo 100-6150 (JP)
(74) Representative: Hoffmann Eitle
(86) International application number: PCT/JP2016/053746
(87) International publication number: WO 2016/147746

(57) **Abstract**

Decoding control techniques are disclosed for achieving low latency communication. One aspect of the present invention relates to user equipment, comprising: a carrier aggregation control unit configured to control carrier aggregation communication with a base station; and a MAC processing unit configured to configure HARQ sharing to manage multiple HARQ processes configured for component carriers in the carrier aggregation communication as common HARQ processes.

## Description

### TECHNICAL FIELD

The present invention relates to a radio communication system.

### BACKGROUND ART

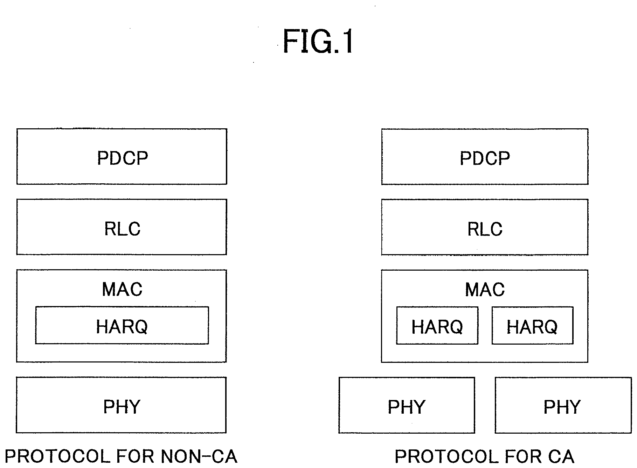

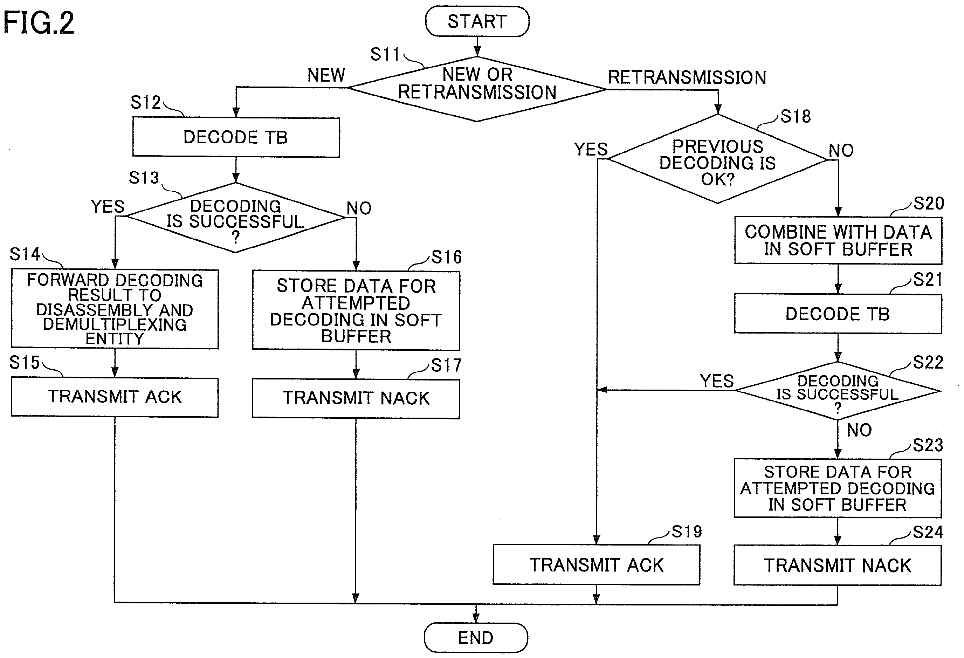

In LTE (Long Term Evolution) systems, a high throughput can be achieved through fast retransmission using a HARQ (Hybrid Automatic Repeat Request) . The HARQ is performed in a MAC (Medium Access Control) layer, and in LTE standard, the number of HARQ processes managed at user equipment (UE) and a base station (evolved NodeB: eNB) is determined depending on cell duplex modes and so on. Also, if carrier aggregation is configured, as illustrated in FIG. 1, an HARQ entity is configured for each cell or component carrier (CC), and the respective HARQ entities maintain multiple HARQ processes. According to the LTE standard, a transport block (TB) is decoded in accordance with a decoding procedure as illustrated in FIG. 2. First, upon receiving the transport block, at step S11, the MAC layer confirms the HARQ process number of the transport block and determines whether the transport block has been newly transmitted or retransmitted. If the transport block has been newly transmitted, the MAC layer decodes the transport block at step S12 and determines whether the decoding result is successful at step S13. If the decoding result is successful, the MAC layer forwards the decoding result to a disassembly and demultiplexing entity at step S14 and transmits an ACK at step S15. On the other hand, if the decoding result is not successful at step S13, the MAC layer stores data attempted for decoding in a soft buffer at step S16 and transmits a NACK at step S17.

On the other hand, if the transport block has been retransmitted at step S11, at step S18, the MAC layer determines whether the transport block has been successfully decoded before. If the transport block has been successfully decoded before, at step S19, the MAC layer transmits the ACK. On the other hand, if the transport block has not been successfully decoded before, at step S20, the MAC layer combines the transport block with data in the soft buffer. The MAC layer decodes the combined transport block at step S21 and determines whether the decoding result is successful at step S22. If the decoding result is successful, at step S19, the MAC layer transmits the ACK. On the other hand, if the decoding result is not successful, the MAC layer stores data attempted for decoding at step S23 and transmits the NACK at step S24.

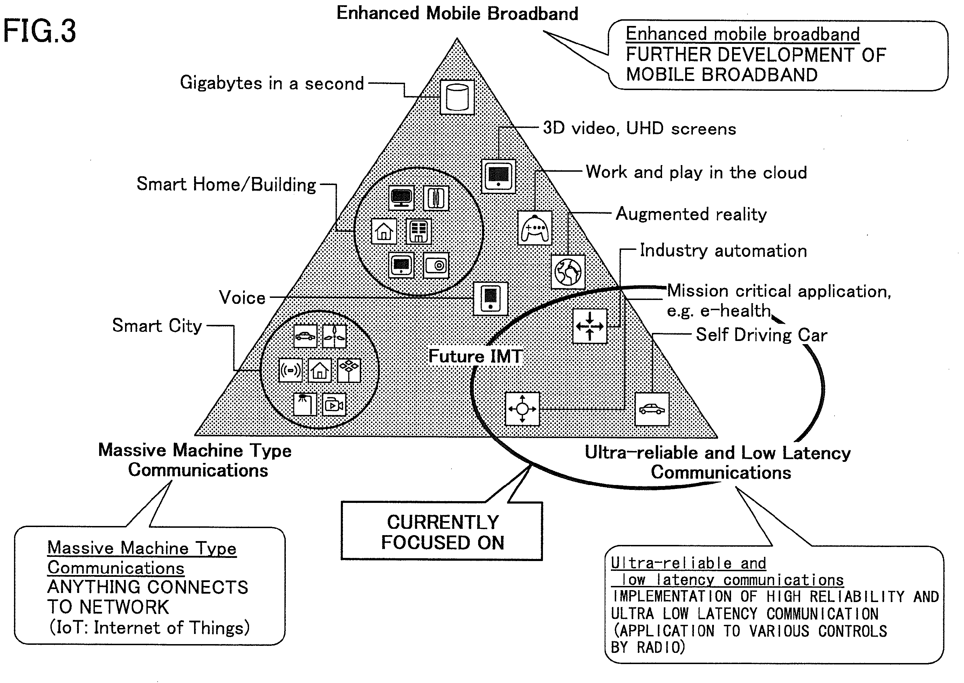

In the fifth generation (5G) communication, three typical use cases as illustrated in FIG. 3 are assumed. Specifically, the three use cases are a use case where mobile broadband is further developed, a use case such as IoT (Internet of Things) where everything is connected to networks and a use case where highly reliable and ultra-low latency communication is achieved.

### Prior Art Document

### [Non-Patent Document]

Non-Patent Document 1: 3GPP TS 36.321 V12.4.0 (2014-12)

### SUMMARY OF INVENTION

### [PROBLEM TO BE SOLVED BY THE INVENTION]

In this manner, one requirement of the 5G communication is the highly reliable and ultra-low latency communication. Conventionally, significantly delayed data transmission and reception have been avoided by prioritizing scheduling for services having a strict latency requirement such as an audio service over other logical channels and user equipments.

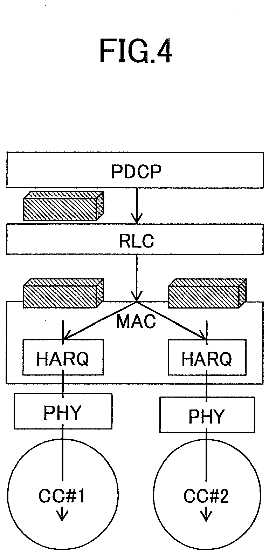

However, in cases where radio quality is insufficient or the cell is congested, even if the priority of these services is enhanced within the cell, latency reduction effect may be limited. Also, as illustrated in FIG. 4, it is considered that retransmission from an RLC (Radio Link Control) layer may be made faster. However, an RTT (Round Trip Time) for the RLC layer is several tens ms, and the latency reduction effect may be limited.

In light of the above-stated problem, an object of the present invention is to provide some decoding control techniques for achieving the low latency communication.

### [MEANS FOR SOLVING THE PROBLEM]

In order to achieve the above object, one aspect of the present invention relates to user equipment, comprising: a carrier aggregation control unit configured to control carrier aggregation communication with a base station; and a MAC processing unit configured to configure HARQ sharing to manage multiple HARQ processes configured for component carriers in the carrier aggregation communication as common HARQ processes.

Another aspect of the present invention relates to a radio communication method by user equipment, comprising: activating carrier aggregation communication with a base station; configuring HARQ processes for component carriers in the carrier aggregation communication; configuring HARQ sharing to manage the configured HARQ processes as common HARQ processes; and performing radio communication with the base station.

### [ADVANTAGE OF THE INVENTION]

According to the present invention, some decoding control techniques for achieving the low latency communication can be provided.

### BRIEF DESCRIPTION OF DRAWINGS

FIG. 1 is a schematic diagram for illustrating HARQ processes in execution of carrier aggregation;
FIG. 2 is a flowchart for illustrating a transport block decoding procedure;
FIG. 3 is a schematic diagram for illustrating typical use cases in the 5G communication;
FIG. 4 is a schematic diagram for illustrating a conventional protocol for HARQ processes in execution of carrier aggregation;
FIG. 5 is a schematic diagram for illustrating a protocol for HARQ processes in execution of carrier aggregation according to one embodiment of the present invention;
FIG. 6A is a schematic diagram for illustrating a radio communication system according to one embodiment of the present invention;
FIG. 6B is a block diagram for illustrating a hardware arrangement of user equipment according to one embodiment of the present invention;
FIG. 6C is a block diagram for illustrating a hardware arrangement of a base station according to one embodiment of the present invention;
FIG. 7 is a block diagram for illustrating an arrangement of user equipment according to one embodiment of the present invention;
FIG. 8 is a diagram for illustrating exemplary semi-static association of common HARQ processes according to one embodiment of the present invention;
FIG. 9 is a diagram for illustrating exemplary dynamic association of common HARQ processes according to one embodiment of the present invention;
FIG. 10 is a schematic diagram for illustrating a decoding operation according to one embodiment of the present invention;
FIG. 11 is a schematic diagram for illustrating a decoding operation according to one embodiment of the present invention;
FIG. 12 is a schematic diagram for illustrating an ACK/NACK transmission operation according to one embodiment of the present invention;
FIG. 13 is a schematic diagram for illustrating an ACK/NACK transmission operation according to one embodiment of the present invention;
FIG. 14 is a schematic diagram for illustrating an ACK/NACK transmission operation according to one embodiment of the present invention;
FIG. 15 is a schematic diagram for illustrating an ACK/NACK transmission operation according to one embodiment of the present invention;
FIG. 16 is a schematic diagram for illustrating an ACK/NACK transmission operation according to one embodiment of the present invention; and
FIG. 17 is a flowchart for illustrating a radio communication method by user equipment according to one embodiment of the present invention.

### EMBODIMENTS OF THE INVENTION

Embodiments of the present invention are described below with reference to the drawings.

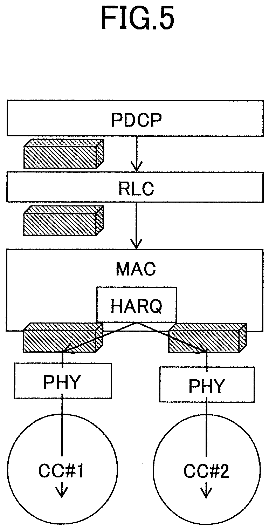

In embodiments as set forth, user equipment having a carrier aggregation function is disclosed. Summarizing the embodiments as stated below, the user equipment configures HARQ processes for multiple component carriers in carrier aggregation communication as well as manages the HARQ processes indicated from a base station as common HARQ processes. As illustrated in FIG. 5, the user equipment uses the multiple component carriers under the HARQ processes including the common HARQ processes to perform MAC transmission and reception or retransmission. Accordingly, even if data transmission and reception is not successful in some of the cells in multiplexed retransmission using resources for the multiple cells due to communication quality, congestion and so on, low latency communication can be achieved through transmission and reception of the data in the other cells.

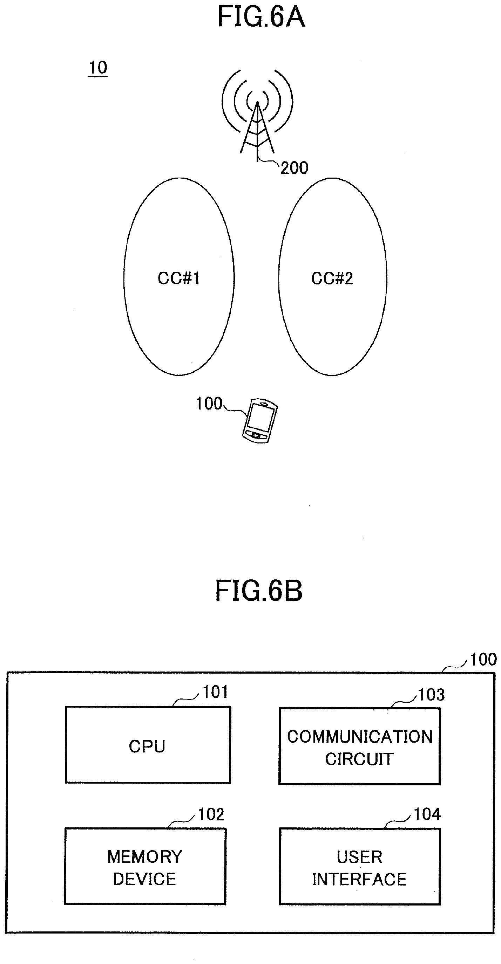

A radio communication system according to one embodiment of the present invention is described with reference to FIG. 6A. FIG. 6A is a schematic diagram for illustrating a radio communication system according to one embodiment of the present invention.

As illustrated in FIG. 6A, a radio communication system 10 has user equipment 100 and a base station 200. For example, the radio communication system 10 may be an LTE system or an LTE-Advanced system supporting carrier aggregation. Specifically, as illustrated, the user equipment 100 can use multiple component carriers CC#1 and CC#2 simultaneously to transmit and receive radio signals to/from the base station 200. In the illustrated embodiment, it is illustrated that the user equipment 100 performs the carrier aggregation communication with the single base station 200, but the present invention is not limited to it. For example, the user equipment 100 may use component carriers served by multiple base stations 200 simultaneously to perform transmission and reception to/from the multiple base stations 200 simultaneously (dual connectivity) . Also in the illustrated embodiment, only the single base station 200 is illustrated, but a large number of base stations 200 are disposed to cover a service area of the radio communication system 10.

The user equipment 100 has a carrier aggregation function to use multiple carriers served by the base station 200 simultaneously to transmit and receive radio signals to/from the base station 200. Typically, as illustrated, the user equipment 100 may be any appropriate information processing device with a radio communication function such as a smartphone, a mobile phone, a tablet, a mobile router and a wearable terminal. As illustrated in FIG. 6B, the user equipment 100 is arranged with a CPU (Central Processing Unit) 101 such as a processor, a memory device 102 such as a RAM (Random Access Memory) and a flash memory, a radio communication device 103 for transmitting and receiving radio signals to/from the base station 200, a user interface 104 such as an input/output device and a peripheral device and so on. For example, functions and operations of the user equipment 100 as stated below may be implemented by the CPU 101 processing and running data and programs stored in the memory device 102. However, the user equipment 100 is not limited to the above-stated hardware configuration and may be arranged with circuits for implementing one or more of operations as stated below.

The base station 200 establishes a radio connection to the user equipment 100 to transmit downlink (DL) packets received from an upper station or a server communicatively connected on a core network (not shown) to the user equipment 100 as well as transmit uplink (UL) packets received from the user equipment 100 to the server. The base station 200 has a carrier aggregation function to transmit and receive radio signals to/from the user equipment 100 via multiple carriers simultaneously.

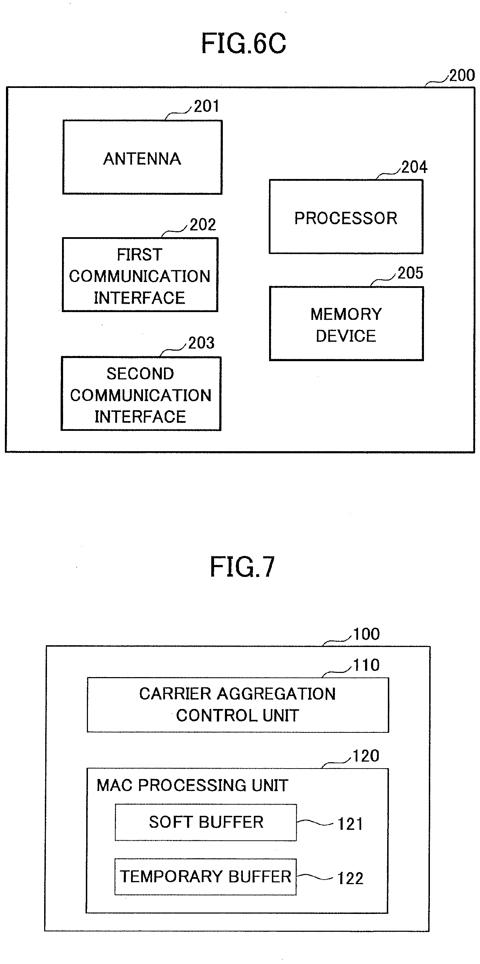

In illustrated in FIG. 6C, the base station 200 is typically arranged with hardware resources such as an antenna 201 for transmitting and receiving radio signals to/from the user equipment 100, a first communication interface 202 (for example, an X2 interface) for communicating with an adjacent base station 200, a second communication interface 203 (for example, an S1 interface) for communicating with the core network, a processor 204 and a circuit for processing signals transmitted and received to/from the user equipment 100 and a memory device 205. Functions and operations of the base station 200 as stated below may be implemented by the processor 204 processing and running data and programs stored in the memory device 205. However, the base station 200 is not limited to the above-stated hardware configuration and may have any other appropriate hardware configuration.

Next, the user equipment according to one embodiment of the present invention is described with reference to FIGS. 7-16. FIG. 7 is a block diagram for illustrating an arrangement of the user equipment according to one embodiment of the present invention.

As illustrated in FIG. 7, the user equipment 100 has a carrier aggregation control unit 110 and a MAC processing unit 120. Also, as illustrated, the MAC processing unit 120 has a soft buffer 121 for storing data received from the base station 200 and a temporary buffer 122 for storing data received from the base station 200 temporarily during decoding the data in the soft buffer 121.

The carrier aggregation control unit 110 controls carrier aggregation communication with the base station 200. Specifically, the carrier aggregation control unit 110 uses multiple carriers served by the base station 200 simultaneously to transmit and receive various radio channels, such as uplink/downlink control channels and uplink/downlink data channels, to/from the base station 200. In the carrier aggregation, a primary cell (PCell) having high reliability to ensure connectivity to the user equipment 100 and a secondary cell (SCell) additionally configured for the user equipment 100 connecting to the primary cell are configured.

The MAC processing unit 120 configures HARQ sharing to manage multiple HARQ processes configured for component carriers (CCs) in the carrier aggregation communication as common HARQ processes. Specifically, the base station 200 configures multiple cells (PCell and SCell) for the user equipment 100 and configures the HARQ sharing to manage multiple HARQ processes for these cells as the common HARQ processes. For example, the base station 200 may configure the respective secondary cells as normal secondary cells in the carrier aggregation or HARQ sharing applied cells and indicate the cells to the user equipment 100. Also, the HARQ sharing may be applied to all or a portion of the configured HARQ processes. In addition, the HARQ sharing may be applied to different component carriers for each HARQ process. For example, in the case where three component carriers CC#1, CC#2 and CC#3 are configured, the HARQ processes #0-#3 may be shared between CC#1 and CC#2 as common HARQ processes, and the HARQ processes #4-#7 may be shared between CC#2 and CC#3 as common HARQ processes.

Also, the HARQ sharing may be applied to downlink communication and uplink communication separately. In other words, the base station 200 may instruct the user equipment 100 to configure the HARQ sharing for the downlink communication and the uplink communication separately. For example, the base station 200 may instruct the user equipment 100 to apply the HARQ sharing for the downlink communication while the base station 200 may not instruct the user equipment 100 to apply the HARQ sharing for the uplink communication. In this case, the MAC processing unit 120 manages indicated HARQ processes in the configured HARQ processes as the common HARQ processes in the downlink communication while the MAC processing unit 120 manages all the configured HARQ processes as separate HARQ processes in the uplink communication.

In this manner, the MAC processing unit 120 can determine HARQ processes managed as the common HARQ processes in accordance with an HARQ sharing configuration instruction from the base station 200. Upon receiving a PDSCH (Physical Downlink Shared Channel) in the HARQ sharing configured component carrier, the MAC processing unit 120 provides a decoding result of the PDSCH to the common HARQ processes and performs retransmission operations.

Note that the carrier aggregation control unit 110 may indicate capability information on the HARQ sharing to the base station 200. Specifically, the carrier aggregation control unit 110 may indicate in the capability information indicating support for carrier aggregation that the user equipment 100 supports the HARQ sharing in the carrier aggregation. For example, for each combination of carrier aggregation supported bands, the carrier aggregation control unit 110 may indicate the number of HARQ sharing capable component carriers and/or the number of HARQ sharing capable HARQ processes as the capability information to the base station 200. In applying the HARQ sharing to the user equipment 100, the base station 200 can specify which of the HARQ processes and component carriers should be managed as the common HARQ processes based on the received capability information.

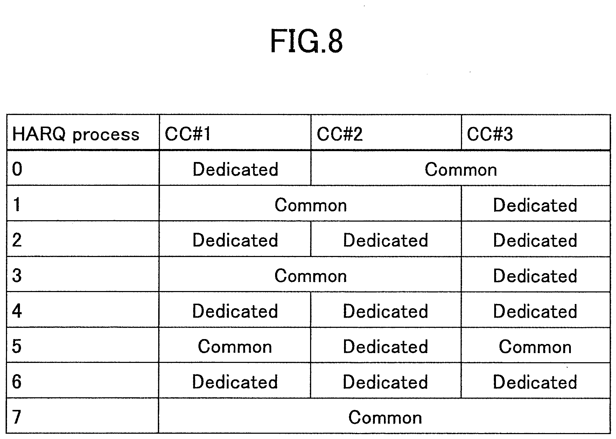

Next, HARQ sharing operations in the user equipment according to one embodiment of the present invention are described with reference to FIGS. 8-9. Some examples as stated below are considered as indication manners of the common HARQ processes in the HARQ sharing.

In one embodiment, the MAC processing unit 120 may statically configure the HARQ processes managed as the common HARQ processes in accordance with association of multiple component carriers with the HARQ processes received from the base station 200 where the HARQ sharing is configured for the multiple component carrier and the HARQ processes. Specifically, the base station 200 configures the association between the HARQ processes and the component carriers, to which the HARQ sharing is applied, for the user equipment 100 beforehand and indicates the user equipment 100 to manage HARQ process #X in CC #x and HARQ process #Y in CC #y as common HARQ processes, for example. Upon receiving the indication, if a PDCCH (Physical Downlink Control Channel) for assigning a PDSCH in CC #x indicates HARQ process #X, the MAC processing unit 120 handles the PDSCH in the common HARQ processes to HARQ process #Y in CC #y. On the other hand, if the PDCCH for assigning the PDSCH in CC #y'indicates HARQ process #Y, the MAC processing unit 120 handles the PDSCH in the common HARQ processes to HARQ process #X in CC #x. As one example, if the above association is indicated to the user equipment 100 in table information as illustrated in FIG. 8, HARQ process #0 in CC #2 and HARQ process #0 in CC #3 are managed as common HARQ processes, HARQ process #1 in CC #1 and HARQ process #1 in CC #2 are managed as common HARQ processes, and so on. In this manner, the base station 200 can indicate the common HARQ processes statically or semi-statically by indicating the association configured beforehand to the user equipment 100.

If the HARQ processes are indicated in a static or semi-static manner as stated above, the soft buffer 121 defined for each user equipment is segmented for use by a product of the number of carrier components and the number of HARQ processes in execution of carrier aggregation. On the other hand, if the HARQ sharing is applied, the soft buffer 121 is segmented based on the number of HARQ processes including the common HARQ processes, and accordingly the number of segments will be smaller. For example, it is assumed that eight HARQ processes are configured for each component carrier where four common HARQ processes are configured for CC #1 and CC #2 and the HARQ sharing is not applied to the remaining four HARQ processes. In this case, since there are four HARQ sharing not-applied HARQ processes in CC #1, four HARQ sharing not-applied HARQ processes in CC #2 and four common HARQ processes, the total number of segments in the soft buffer would be equal to 12.

Although HARQ process numbers may be different, it may be considered that they are implicitly uniform. In this case, it is possible to reduce the amount of information required to configure the HARQ sharing, compared with the case of explicit indication.

In another embodiment, the MAC processing unit 120 may dynamically configure the HARQ processes managed as the common HARQ processes in accordance with association of component carriers with the HARQ processes indicated for respective downlink transmissions scheduled by the base station 200. Specifically, the base station 200 configures the HARQ sharing in an upper layer such as an RRC layer semi-statically. Then, for each scheduled downlink communication, the base station 200 indicates the components carrier and the HARQ process number configured as the common HARQ process in a PDCCH. As one example, if "HARQ process #Y in CC #y" is indicated in the PDCCH for assigning a PDSCH in CC #x, upon receiving the PDSCH, the MAC processing unit 120 handles the PDSCH with the common HARQ process to HARQ process #Y in CC #y to perform decoding operation. As another example, if "HARQ process #X in CC #x" is indicated in the PDCCH for assigning the PDSCH in CC #x, upon receiving the PDSCH, the MAC processing unit 120 handles the PDSCH in the common HARQ process to HARQ process #X in CC #x to perform decoding operations. In this manner, the base station 200 can dynamically indicate the common HARQ processes for each downlink transmission.

In one embodiment, the association of component carriers with the HARQ processes indicated for respective downlink transmissions scheduled by the base station 200 may be indicated by a bit or scheduling information included in a downlink control channel. For example, to-be-shared component carriers may be explicitly indicated in a bit in the PDCCH or implicitly indicated in scheduling information (for example, a CCE (Control Channel Element) index, an aggregation level or the like) in the PDCCH.

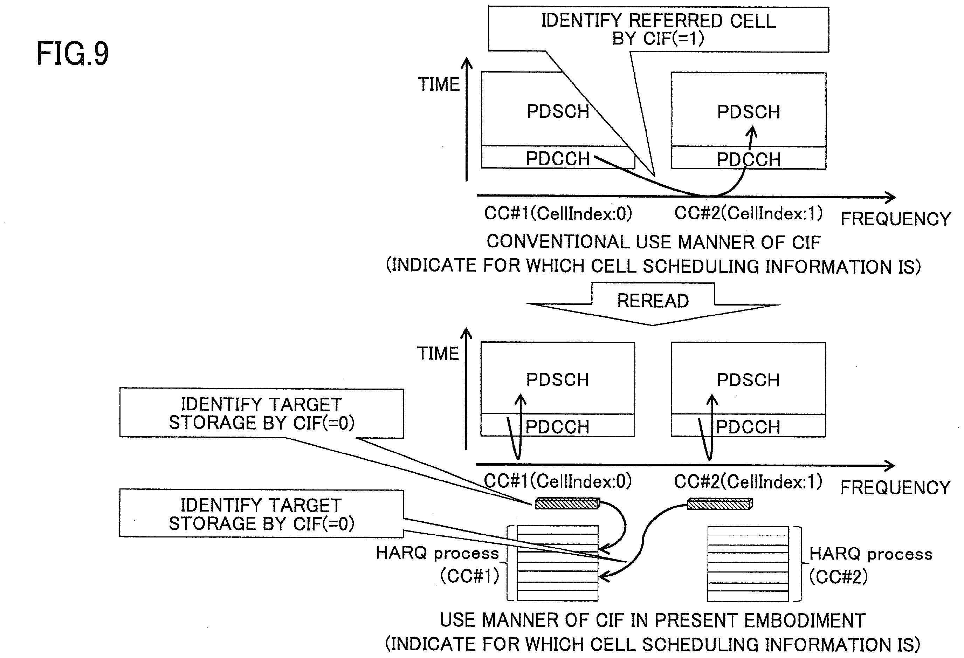

In the explicit indication, for example, a conventional CIF (Carrier Indicator Field) in the PDCCH indicating for which cell the scheduling information is directed may be utilized, as illustrated in FIG. 9. In other words, if the HARQ sharing is applied, the MAC processing unit 120 may interpret the meaning of CIF as being that it indicates a cell whose data should be combined with the received PDSCH. For example, as illustrated in the lower side in FIG. 9, if the CIF in the PDCCH received in CC #1 and the CIF in the PDCCH received in CC #2 indicate CC #1 (Celllndex: 0) (CIF = 0), the MAC processing unit 120 combines these two PDSCHs with data in CC #1.

On the other hand, in the case where the common HARQ process is dynamically indicated, there is a likelihood that the number of HARQ processes managed on a per user equipment basis may be dynamically changed. Dynamic segmentation for the soft buffer 121 corresponding to the dynamic change in the number of HARQ processes may complicate management of the soft buffer 121. Accordingly, the MAC processing unit 120 may segment the soft buffer 121 by the number of HARQ processes for the case where the HARQ sharing is not applied. For example, it is assumed that eight HARQ processes are configured for each component carrier where four common HARQ processes are configured for CC #1 and CC #2 and the HARQ sharing is not applied to the remaining four HARQ processes. In this case, since there are eight HARQ processes in CC #1 and eight HARQ processes in CC #2 before application of the HARQ sharing, the total number of segments in the soft buffer would be equal to 16.

Note that the static, semi-static or dynamic configuration of the common HARQ processes may be performed for downlink communication and uplink communication separately as stated above.

The above-stated embodiments on the HARQ sharing have been focused on the downlink communication, but it would be apparent that the similar control can be applied to the base station 200 in the uplink communication. For example, in uplink carrier aggregation, the MAC layer in the base station 200 may apply the HARQ sharing to manage multiple HARQ processes configured for respective component carrier as common HARQ processes.

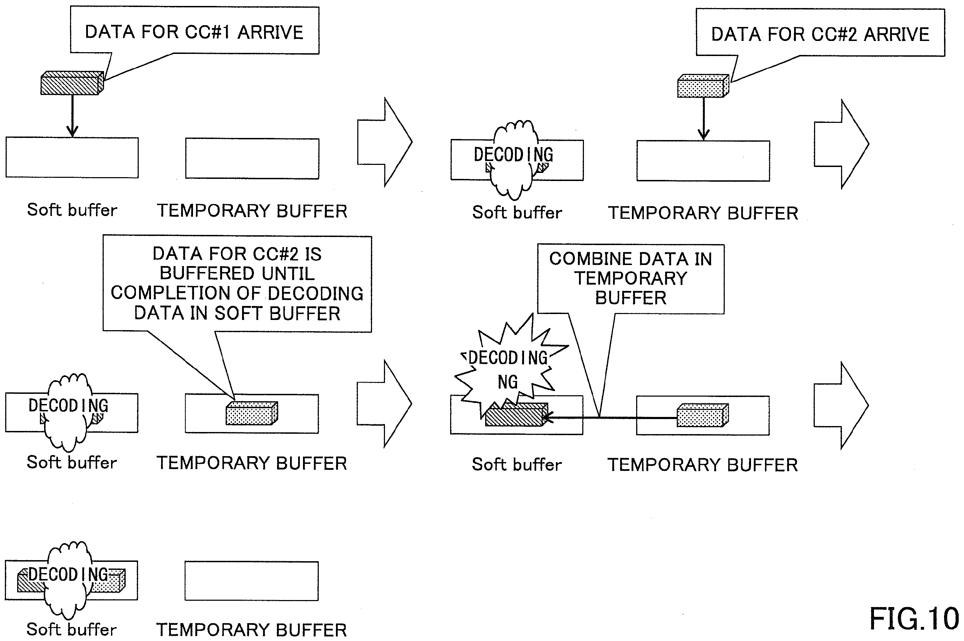

Next, decoding operations in the user equipment according to one embodiment of the present invention are described with reference to FIGS. 10-11. In embodiments below, the MAC processing unit 120 uses the soft buffer 121 for storing data received from the base station 200 for decoding and the temporary buffer 122 for temporarily storing data associated with common HARQ processes received from the base station 200 during decoding data in the soft buffer 121.

In one embodiment, upon receiving data retransmitted from the base station 200, the MAC processing unit 121 may decode the retransmitted data by combining with data stored in the soft buffer 121 and activate an operation on data stored in the temporary buffer 122 in accordance with a decoding result of the retransmitted data. Specifically, if a received transport block has been newly transmitted in the cell or if data corresponding to the HARQ process is not stored in the soft buffer 121, the MAC processing unit 120 decodes the transport block. On the other hand, if the received transport block is retransmitted data, the MAC processing unit 120 processes the received retransmitted data serially. Specifically, as illustrated in FIG. 10, if the previous decoding result is unsuccessful, the MAC processing unit 120 combines data stored in the soft buffer 121 corresponding to the HARQ process of received data with the received data and decodes the combined data. Upon receiving data during decoding the data in the soft buffer 121 (for example, in the case where data received in other cells is being decoded), the MAC processing unit 120 stores and retains the received data in the temporary buffer 122. After that, if the decoding result of the data in the soft buffer 121 is successful, the MAC processing unit 120 discards the data in the temporary buffer 122, and otherwise if the decoding result of the data in the soft buffer 121 is unsuccessful, the MAC processing unit 120 combines the data in the temporary buffer 122 with the data in the soft buffer 121 and decodes the combined data.

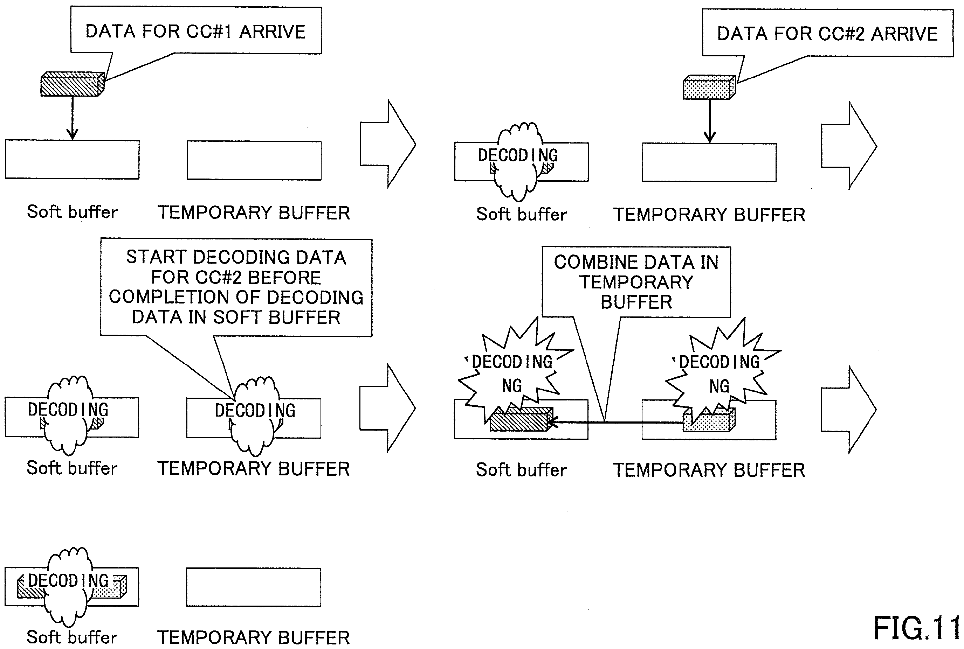

In another embodiment, upon receiving data retransmitted from the base station 200, the MAC processing unit 120 may decode the retransmitted data by combining with data stored in the soft buffer 121 and decode data received from the base station 200 during decoding the retransmitted data and stored in the temporary buffer 122 in parallel. Specifically, if a received transport block has been newly transmitted in the cell or if data corresponding to the HARQ process is not stored in the soft buffer 121, the MAC processing unit 120 decodes the transport block. On the other hand, if the received transport block is retransmitted data, the MAC processing unit 120 processes the received retransmitted data in parallel. Specifically, as illustrated in FIG. 11, if the previous decoding result is unsuccessful, the MAC processing unit 120 combines data stored in the soft buffer 121 corresponding to the HARQ process number of the received data with the received data and decodes the combined data. Upon receiving data during decoding the data in the soft buffer 121 (for example, in the case where data received in other cells is being decoded), the MAC processing unit 120 stores the received data in the temporary buffer 122 as well as decoding the data in the temporary buffer 122 independently without combining with other data in parallel with decoding the data in the soft buffer 121. After that, if the decoding result of any of the data in the soft buffer 121 and the data in the temporary buffer 122 is successful, the MAC processing unit 120 may stop the other decoding operation. At this time, the MAC processing unit 120 may store the successfully decoded data in the soft buffer 121. On the other hand, if the decoding results of both the soft buffer 121 and the temporary buffer 122 are unsuccessful, the MAC processing unit 120 may combine the data in the temporary buffer 122 with the data in the soft buffer 121 and decode the combined data.

Alternatively, if the decoding result of an earlier finished decoding operation is unsuccessful, the MAC processing unit 120 may combine data in the temporary buffer 122 with data in the soft buffer 121 without waiting for a subsequent decoding result and decode the combined data. Alternatively, if the decoding results of both the soft buffer 121 and the temporary buffer 122 are unsuccessful, the MAC processing unit 120 may discard one of the data in the soft buffer 121 and the data in the temporary buffer 122 in accordance with a predefined rule and decode the other data. For the predefined rule, the MAC processing unit 120 may select to-be-decoded data based on a cell index, communication quality (RSRP, SINR, RSRQ, CQI and so on), an MCS (Modulation and Coding Scheme), a PDCCH aggregation level, a MIMO (Multiple-Input Multiple-Output) rank or the like.

Note that the temporary buffer 122 may be provided separately from the soft buffer 121 or use a portion of the soft buffer 121.

It would be apparent that although the above-stated embodiments associated with the serial and parallel decoding operations using the temporary buffer 122 are focused on downlink communication, similar control is also applicable in the base station 200 in uplink communication. For example, in uplink carrier aggregation, upon receiving data retransmitted from the user equipment 100, the MAC layer in the base station 200 may decode the retransmitted data by combining with data stored in the soft buffer and activate an operation on data stored in the temporary buffer in accordance with a decoding result of the retransmitted data. Alternatively, upon receiving data retransmitted from the user equipment 100, the MAC layer in the base station 200 may decode the retransmitted data by combining with data stored in the soft buffer and decode data received from the base station 200 during decoding the retransmitted data and stored in the temporary buffer in parallel.

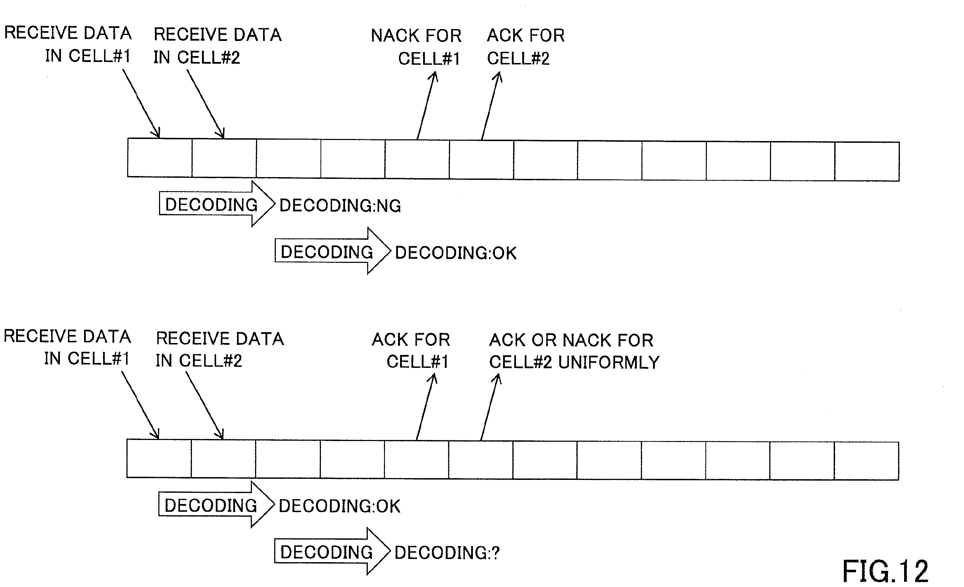

Next, ACK/NACK transmission operations in the user equipment according to one embodiment of the present invention are described with reference to FIGS. 12-16. In embodiments below, the MAC processing unit 120 reports all or a portion of decoding results on the retransmitted data to the base station 200.

First, in the serial decoding operation described with reference to FIG. 10, a case where the MAC processing unit 120 reports all the decoding results to the base station 200 is described. In this case, as illustrated in FIG. 12, the MAC processing unit 120 transmits an ACK/NACK for data in the soft buffer 121 (data received in cell #1) depending on the decoding result and also transmits an ACK/NACK for data combined with the temporary buffer 122 depending on the decoding result. As illustrated in the lower side in FIG. 12, in the case where data in the soft buffer 121 has been successfully decoded before combining with data in the temporary buffer 122, since the reception is successful for the HARQ process, the MAC processing unit 120 may always return an ACK for the data in the temporary buffer 122. Alternatively, the MAC processing unit 120 may always return a NACK. This is because the ACK transmission may make this control excessively aggressive to communication quality in the case where the base station 200 controls AMC (Adaptive Modulation and Coding) in an out-loop manner based on the ACK/NACK from the user equipment 100.

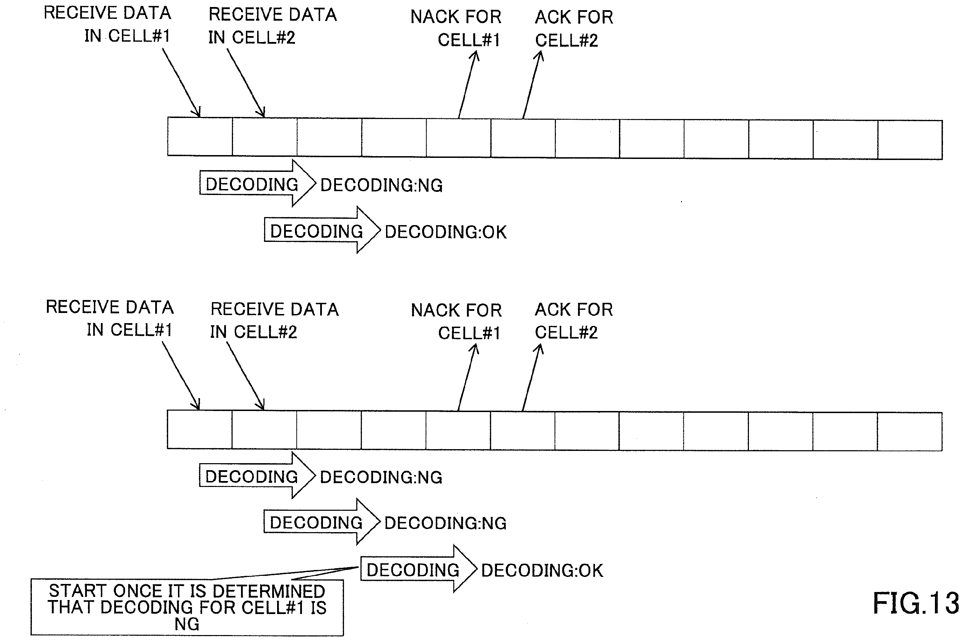

Then, in the parallel decoding operation described with reference to FIG. 11, a case where the MAC processing unit 120 reports all the decoding results to the base station 200 is described. In this case, as illustrated in FIG. 13, the MAC processing unit 120 transmits an ACK/NACK for data in the soft buffer 121 (data received in cell #1) depending on the decoding result and also transmits an ACK/NACK for data combined with the temporary buffer 122 depending on the decoding result. In the case where the data in the soft buffer 121 has been successfully decoded before combining the data in the temporary buffer 122, since the reception is successful for the HARQ process, the MAC processing unit 120 may always return the ACK/NACK for the data in the temporary buffer 122. As illustrated in the upper side in FIG. 13, if the data in the temporary buffer 122 is successfully decoded independently, the MAC processing unit 120 returns the ACK, and as illustrated in the lower side in FIG. 13, if the data in the soft buffer 121 is combined with the data in the temporary buffer 122 and the combined data has been successfully decoded, the MAC processing unit 120 transmits the ACK/NACK depending on the decoding result of the combined data.

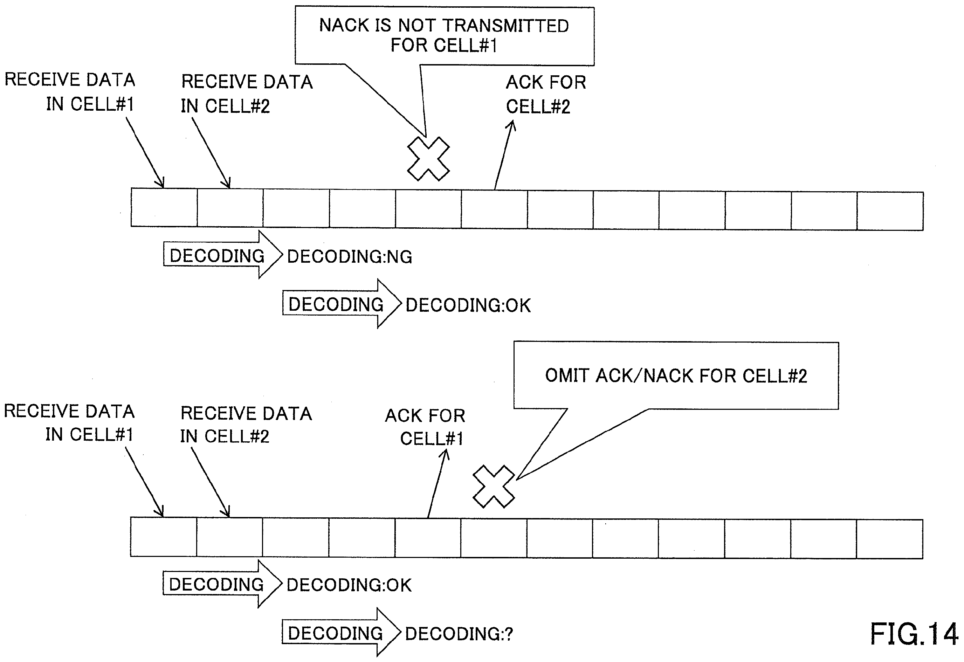

Then, in the serial decoding operation described with reference to FIG. 10, a case where the MAC processing unit 120 reports only a portion of decoding results to the base station 200 is described. In this case, as illustrated in the lower side in FIG. 14, if an earlier decoding operation is successful, the MAC processing unit 120 transmits an ACK at this time. For subsequent decoding operations, the MAC processing unit 120 may always return an ACK/NACK, indicate that the decoding has not been performed, transmit actual decoding results or stop transmitting the ACK/NACK. If the earlier decoding operation is unsuccessful, as illustrated in the upper side in FIG. 14, the MAC processing unit 120 does not transmit the NACK immediately in the case where the temporary buffer 122 has data and transmits the ACK/NACK depending on a decoding result of data obtained as result of combining the data in the soft buffer 121 with the data in the temporary buffer 122.

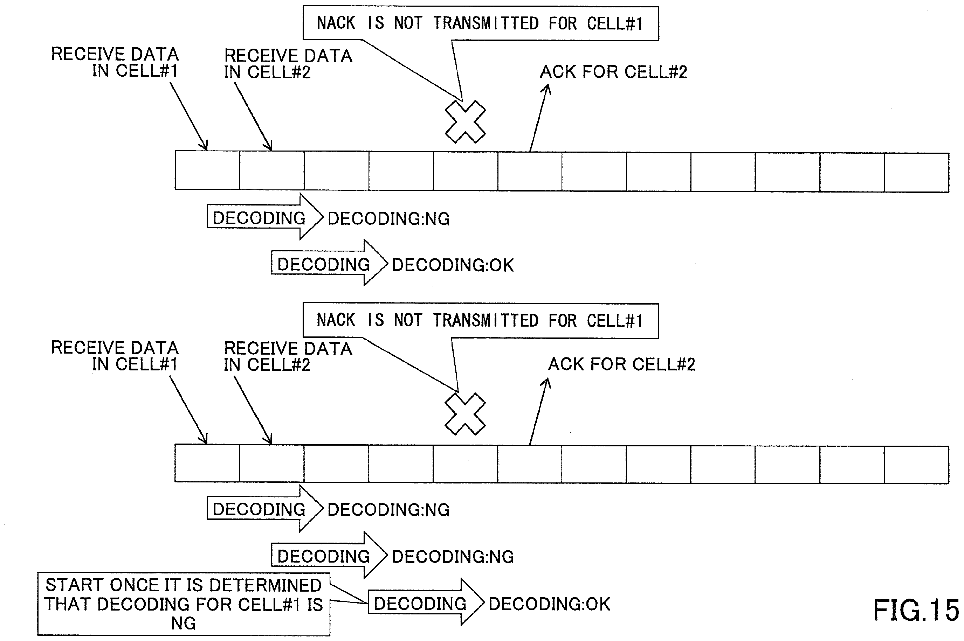

Finally, in the parallel decoding operation described with reference to FIG. 11, a case where the MAC processing unit 120 reports only a portion of decoding results to the base station 200 is described. In this case, if an earlier decoding operation is successful, the MAC processing unit 120 transmits an ACK at this time. For subsequent decoding operations, the MAC processing unit 120 may always return an ACK/NACK, indicate that the decoding has not been performed, transmit actual decoding results or stop transmitting the ACK/NACK. If the earlier decoding operation is unsuccessful, as illustrated in the upper side in FIG. 15, the MAC processing unit 120 does not transmit the NACK immediately in the case where decoding operations have been activated on data in the temporary buffer 122 and transmits the ACK/NACK depending on a decoding result of the data in the temporary buffer 122. Furthermore, if the data in the temporary buffer 122 has not been successfully decoded and data obtained as a result of combining the data in the soft buffer 121 with the data in the temporary buffer 122 is decoded, as illustrated in the lower side in FIG. 15, the MAC processing unit 120 may transmit an ACK/NACK depending on the decoding result of the combined data.

Here, if the NACK for the unsuccessful decoding result has not been transmitted, the MAC processing unit 120 may transmit an ACK/NACK in a decoding result of a subsequent decoding operation as well as indicate to the base station 200 that it refrained from transmitting the NACK for the earlier decoding operation. This is intended to indicate to the base station 200 some causes of the failure of the ACK/NACK reception at the base station 200 such as insufficient power of a PUCCH (Physical Uplink Control Channel) or unsuccessful decoding. If the reception failure is erroneously recognized as resulting from the insufficient power, the base station 200 may control the user equipment 100 to increase the transmission power of the PUCCH unnecessarily.

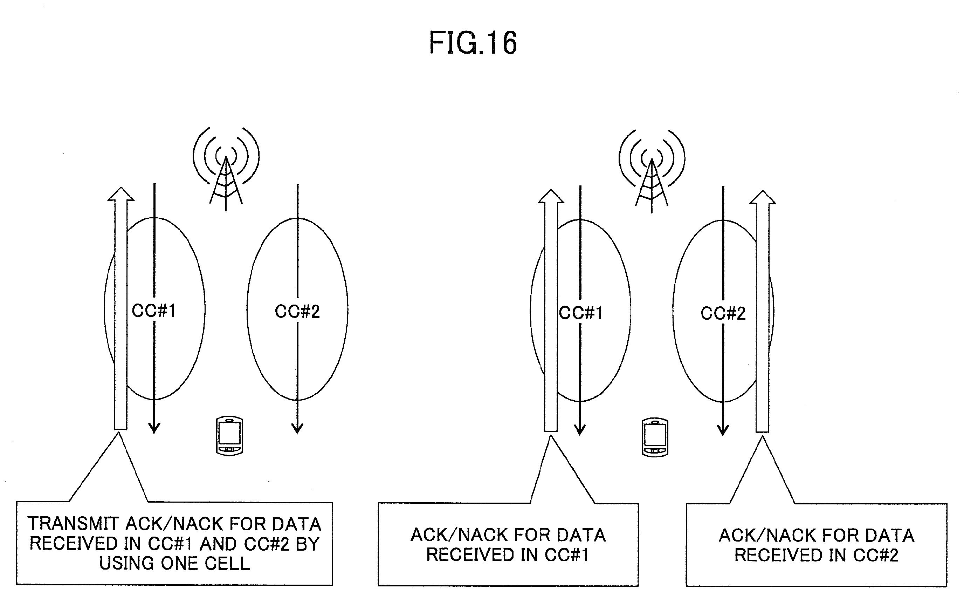

In one embodiment, the MAC processing unit 120 may transmit an ACK/NACK in only a certain cell (for example, a PCell, a cell indicated by a network or the like) or in a cell receiving the data. For example, as illustrated in the left side in FIG. 16, the MAC processing unit 120 may transmit an ACK/NACK for data received in CC #1 and CC #2 by using CC #1. Also, as illustrated in the right side in FIG. 16, the MAC processing unit 120 may transmit an ACK/NACK for data received in CC #1 by using CC #1 and an ACK/NACK for data received in CC #2 by using CC #2. The above-stated ACK/NACK transmission operations are for decoding operations on data received at the user equipment 100 in downlink communication, but the present invention is not limited to it. Similar ACK/NACK transmission operations can be applied to decoding operations on data received at the base station 200 in uplink communication. In other words, the base station 200 may report all or a portion of decoding results for retransmitted data to the user equipment 100.

The above-stated embodiments of ACK/NACK transmission operations are focused on the downlink communication, but it will be apparent that similar control can be applied to the base station 200 in the uplink communication. In other words, the MAC layer in the base station 200 may indicate to the user equipment 100 all or a portion of decoding results for data retransmitted from the user equipment 100.

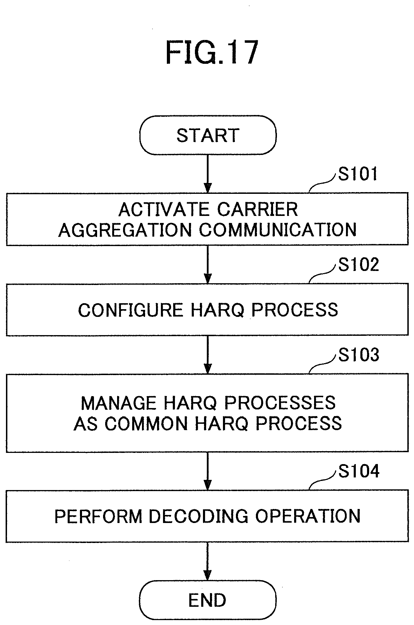

Next, a radio communication operation in the user equipment according to one embodiment of the present invention is described with reference to FIG. 17. FIG. 17 is a flowchart for illustrating a radio communication method by the user equipment according to one embodiment of the present invention.

As illustrated in FIG. 17, at step S101, the user equipment 100 activates carrier aggregation communication with the base station 200. Specifically, at connection establishment, the user equipment 100 transmits capability information as to whether the user equipment 100 supports carrier aggregation to the base station 200. The base station 200 activates the carrier aggregation communication with the user equipment 100 by configuring an additional cell (secondary cell) based on the received capability information.

At step S102, the user equipment 100 configures HARQ processes for component carriers in the carrier aggregation communication. The user equipment 100 configures HARQ entities for the respective component carriers in the MAC layer, and the respective HARQ entities configure multiple HARQ processes.

At step S103, the user equipment 100 configures HARQ sharing to manage the configured HARQ processes as common HARQ processes. For example, the user equipment 100 manages the indicated HARQ processes as the common HARQ processes in accordance with an HARQ sharing configuration instruction from the base station 200. Specifically, the base station 200 may configure association between multiple component carriers and HARQ processes, for which the HARQ sharing is configured, in a static or semi-static manner and indicate the association to the user equipment 100. Alternatively, the base station 200 may indicate the common HARQ processes in a downlink control channel for scheduling downlink transmission.

At step S104, the user equipment 100 performs radio communication with the base station 200. Specifically, the user equipment 100 may have the soft buffer 121 for storing data received from the base station 200 and the temporary buffer 122 for temporarily storing data received from the base station 200 during decoding the data in the soft buffer 121 and control decoding operations on downlink signals by decoding data in the same HARQ processes serially or in parallel.

Although the embodiments of the present invention have been described in detail, the present invention is not limited to the above-stated specific embodiments, and various modifications and variations can be made within the spirit of the present invention as recited in claims.

This international patent application claims the benefit of priority based on Japanese Priority Application No. 2015-051027 filed on March 13, 2015, the entire contents of which are hereby incorporated by reference.

### LIST OF REFERENCE SYMBOLS

10: radio communication system
100: user equipment
110: carrier aggregation control unit
120: MAC processing unit
200: base station

## Claims

1. User equipment, comprising:
a carrier aggregation control unit configured to control carrier aggregation communication with a base station; and
a MAC processing unit configured to configure HARQ sharing to manage multiple HARQ processes configured for component carriers in the carrier aggregation communication as common HARQ processes.

2. The user equipment as claimed in claim 1, wherein the MAC processing unit determines the HARQ processes managed as the common HARQ processes in accordance with a configuration instruction of the HARQ sharing from the base station.

3. The user equipment as claimed in claim 2, wherein the MAC processing unit statically configures the HARQ processes managed as the common HARQ processes in accordance with association of multiple component carriers with the HARQ processes received from the base station, the HARQ sharing being configured for the multiple component carrier and the HARQ processes.

4. The user equipment as claimed in claim 2, wherein the MAC processing unit dynamically configures the HARQ processes managed as the common HARQ processes in accordance with association of component carriers with the HARQ processes indicated for respective downlink transmissions scheduled by the base station.

5. The user equipment as claimed in claim 4, wherein the association of component carriers with the HARQ processes indicated for respective downlink transmissions scheduled by the base station is indicated by a bit or scheduling information included in a downlink control channel.

6. The user equipment as claimed in any one of claims 1 to 5, wherein the MAC processing unit includes:
a soft buffer configured to store data received from the base station; and
a temporary buffer configured to temporarily store data received from the base station during decoding data in the soft buffer.

7. The user equipment as claimed in claim 6, wherein upon receiving data retransmitted from the base station, the MAC processing unit decodes the retransmitted data by combining with data stored in the soft buffer and activates an operation on data temporarily stored in the temporary buffer in accordance with a decoding result of the retransmitted data.

8. The user equipment as claimed in claim 6, wherein upon receiving data retransmitted from the base station, the MAC processing unit decodes the retransmitted data by combining with data stored in the soft buffer and decodes data received from the base station during decoding the retransmitted data and stored in the temporary buffer in parallel.

9. The user equipment as claimed in claim 7 or 8, wherein the MAC processing unit reports all or a portion of decoding results on the retransmitted data to the base station.

10. A radio communication method by user equipment, comprising:
activating carrier aggregation communication with a base station;
configuring HARQ processes for component carriers in the carrier aggregation communication;
configuring HARQ sharing to manage the configured HARQ processes as common HARQ processes; and
performing radio communication with the base station.
